# EUROPEAN PATENT SPECIFICATION

(11) **EP 3 985 934 B1**
(45) Date of publication and mention of the grant of the patent: **19.03.2025**
(21) Application number: 20201684.6
(22) Date of filing: 14.10.2020
(51) Int. Cl.: H04L 9/40, G06F 21/56

(54) **METHOD OF AUTOMATED CLASSIFICATION AND CLUSTERING OF IT-SYSTEMS**
VERFAHREN FÜR AUTOMATISIERTES KLASSIFIZIEREN UND CLUSTERING VON IT-SYSTEMEN
PROCÉDÉ DE CLASSIFICATION ET DE REGROUPEMENT AUTOMATISÉS DE SYSTÈMES INFORMATIQUES

(43) Date of publication of application: 20.04.2022
(73) Proprietor: Deutsche Telekom AG, 53113 Bonn (DE)
(72) Inventor: Sbeiti, Mohamad, 45657 Recklinghausen (DE); Kloth, Mathias, 51429 Bergisch Gladbach (DE); Yan, Leyi, 53175 Bonn (DE)
(74) Representative: Braun-Dullaeus Pannen Emmerling Patent- & Rechtsanwaltspartnerschaft mbB

(56) References cited:
- WO-A1-2020/022953
- US-A1- 2012 272 099
- US-A1- 2017 078 309
- US-A1- 2019 104 154

## Description

The invention relates to a method, a computer system and a computer program product that enable automated classification and clustering of IT-Systems.

During the last years, digitization has become more and more relevant and is an integral party in our daily lives. It is beyond dispute that security is a core need for digitization, Industry 4.0 and Internet of Things (IoT), and with 5G - the digital life - the "attack surface" is to become larger due to the new dimensions of connected entities.

According to the source "https://github.com/BishopFox/eyeballer", there are 16 billion IoT connected devices in 2016, while 29 billion devices are forecasted by 2022. Meanwhile, the number of successful large-scale cyber-attacks is rising, e.g., Emotet and WannaCry, and the asymmetry in the cyberwarfare is increasing. Here, skilled hacker ability increases to harm enterprises, organizations and even states despite more investments in the defense line.

Thereby, a fundamental question the driver of digitization and 5G needs to answer is: How adopters of digitization and 5G can be well prepared against security threats?

Especially the following three points pose an immense challenge, with which existing security measures and tools have not been able to cope:
- A detailed overview of the assets of an enterprise/internet service provider is decreasing due to the continuous boost of new online services and interconnected systems, combined with agile development methods and the emerging mutlicloud deployment strategy. However, a service provider need to know which digital services he offers in order to shield those service from cyber-attacks.
- The number of discovered vulnerabilities is rapidly increasing in the last two years an 88% increase in application vulnerabilities was witnessed. This curve is even expected to continue rising due to the growing number of services and products combined with the total increase of resources and capabilities in the area of vulnerability research.

- The exploitation time of security vulnerabilities is rapidly decreasing. According to a "Fireeye" report, two vulnerabilities were successfully exploited within hours of a patch release, CVE-2018-2628 and CVE-2018-7602. This is because the number of online easy-to-use open-source exploitation tools and Proof-of-Concepts have become widespread.

Due to these facts and the limitation of existing solutions, even malicious users with low level of expertise have become capable to hack large organizations, internet service provider and/or internet capable devices.

WO 2020/022953 A1 describes a system and method for identifying Internet of Things (IoT) devices communicatively connected to a plurality of gateways. The gateways are in turn all connected to a controller module which is configured to train and maintain classifier models for fingerprinting the IoT devices. The gateways themselves are configured to utilize the updated classifier models generated by the controller module to classify IoT devices connected to them.

US 2017/078309 A1 discloses Systems and methods for detecting vulnerabilities and/or privileged access are disclosed. In some embodiments, a computerized method comprises receiving asset information for each of a plurality of assets, the assets connected to a network; clustering the assets into a plurality of cluster nodes based on the asset information, each of the assets being clustered in one of the cluster nodes, at least a first asset being clustered in a particular one of the cluster nodes; receiving one or more events associated with the first asset; remapping the first asset to a different one of the cluster nodes based on the asset information of the first asset and the one or more events associated with the first asset; calculating a distance between the particular cluster node and the different cluster node; and triggering one or more actions based on the distance between the particular cluster node and the different cluster node.

US 2019/104154 A1 discloses a computerized method for analyzing a subject URL to determine whether the subject URL is associated with a phishing attack is disclosed. The method includes steps of detecting keypoints within a screenshot of a webpage corresponding to the subject URL and determining a set of confidences based on an analysis of the detected keypoints with a model.

In the view of above, it is an object of the present invention to provide a method, a computer and a computer program product that enable organizations, internet service provider and/or internet capable devices to continuously re-discover and group their internet-capable services in order to able to efficiently perform security investigations.

This object is solved by the features of the independent claims.

The features of the various aspects of the invention described below or the various examples of implementation may be combined with each other, unless this is explicitly excluded or is technically impossible According to a first aspect of the invention, a method for automatic and dynamic clustering of IT-services according to claim 1 is provided.

This provides the advantage that the company can get a structured and transparent overview of its whole IT-services. But it is also possible to provide this method by a third party for companies in order to give the company an overview of its IT-services because the IT-service-information as well as the list of IT-services can be extracted externally. For example, the IT-services can be webpages. A small company with only one webpage can classify and cluster its webpage, subdomains and so on in principle manually. This gets very cumbersome for large companies that can have of different websites with different properties. The structured and transparent overview of the webpages in different classes and different clusters provides advantageous means for big company to handle its IT-services or webpages, respectively.

An association to a certain class and/or to a certain cluster indicates a similarity of the IT-services within that certain class and/or to that certain cluster.

This provides the advantage that the company easily knows that all IT-services within that certain class and/or that certain cluster have similar properties so that the companies can handle those IT-services in a uniform way. This greatly enhances the efficiency of the operators of the respective IT-services of the company. Automated scripts perform certain tasks on the IT service based on its class and or cluster membership. In addition, it is possible to tag the classes and/or the clusters with names that indicate associated properties. This can provide additional efficiency when applying the automated scripts.

The similarity is a security vulnerability similarity.

This provides the advantage that the company can get a structured overview of the security status of its IT-services, in particular its webpages. This enables the company to efficiently find those webpages with the highest security risk. According to the method, those webpages can be found within a small number of clusters, in particular within one single cluster. Or the method provides clusters ordered regarding their security status. Hence, the company fix the most threatened webpages first, in particular in an automated way. A possible way would be to let a respective script simply run overall IT services within a distinct cluster. This provides an efficient way for big companies to prevent cyber-attacks on their IT services.

In an embodiment, the IT-service-information are externally visible when requesting the IT-service. This means that the IT-service-information can be seen from a "hacker's view". This has the advantage that foreign companies can offer the service of providing clustering of the IT-services and as an additional advantage that the analysis is performed on properties of the IT services a hacker also has access to. This is more efficient than analyzing other properties of the IT-services that do not provide a possible entrance gate for cyber-attacks.

The first IT-service-information is a status-code of the IT-service, wherein the second IT-service-information is a screenshot of the IT-service, wherein the third IT-service-information is extracted from a HTML-Body of the IT-service.

This provides the advantage that it is easily possible to access these IT-service-information in a scripted way when requesting the IT-service and that each of the IT-service-information yields different kinds of information that help to tackle the problem of correct classifying and clustering from "different directions".

The status-code can be a Hypertext Transfer Protocol (HTTP) response status-codes. Status codes are issued by a server in response to a client's request made to the server. The first digit of the status code specifies one of five standard classes of responses. The message phrases shown are typical, but any human-readable alternative may be provided. All HTTP response status codes are separated into five classes or categories. The first digit of the status code defines the class of response, while the last two digits do not have any classifying or categorization role. There are five classes defined by the standard: 1xx informational response - the request was received, continuing process; 2xx successful - the request was successfully received, understood, and accepted; 3xx redirection - further action needs to be taken in order to complete the request; 4xx client error - the request contains bad syntax or cannot be fulfilled; 5xx server error - the server failed to fulfil an apparently valid request. Of course classifications can be done based on the status code and/or search strings like login, Tomcat etc.

The screenshot as the second IT-service-information delivers structural information about the IT-service or the webpage, respectively. For example, companies create their webpages with similar icons, colors etc. this information can be used to group these webpages together as clusters. Another example is that webpages that comprise login fields share several comments pictures, for example a first empty field for the username and the second empty field for the password. Another advantage is that this structural information of the screenshots can be independent from the language that is used in the HTML-body.

On the other hand, if the language of the HTML-body is known, it is possible to use this information advantageously as the third IT-service-information. For example, this could be helpful if two login pages what look structurally very different but if the HTML-body with in both cases contain the words "username" and "password". In this case, these two similar pages can efficiently be clustered based on information from the HTML-body.

The IT-service-information can be used by applying supervised or unsupervised algorithms.

In an embodiment, a first additional step is performed, in particular following the second step, wherein the first additional step improves the classifying by assigning at least on IT-service from one class to another class based on the second piece of the IT-service-information.

This provides the advantage, that webpages that have not been programmed carefully and return uncorrected status-codes can be classified into the correct classes by additionally using the second piece of the IT-service-information. Incorrect status-codes can also be caused by hackers in case of Firewalls and other security systems. As an example, the first additional step can help finding login pages that do not have the login search string in the response, thus, being not classified into a login class. To be very efficient and accurate, the first additional step can use supervised machine learning algorithms, for example the Mobilenet algorithm, that is trained on data sets comprising the second piece of the IT-service-information. Supervised machine learning algorithms are very efficient to classify structural information from images like screenshots.

In an embodiment, the third step uses a second algorithm if the clustering is based on the second piece of the IT-service-information and/or that the third step uses a third algorithm if the clustering is based on the third piece of the IT-service-information.

Using the second piece of the IT-service-information with another algorithm, namely the second algorithm, provides the advantage of having the chance to analyze the IT-services "differently" compared to the case when the first algorithm was used on the second piece of the IT-service-information. In particular, the second algorithm uses an unsupervised clustering machine learning algorithm, like DBSCAN, which efficiently clusters the IT-services within the classes even without training data set. Using the third piece of the IT-service-information with another algorithm, namely the third algorithm, provides the advantage of having the chance to analyze the IT-services "differently" compared to all other cases described above. In particular, the third algorithm uses an unsupervised deep learning "word2vec" natural language processing model. Especially preferred the third algorithm uses a self-supervised deep learning "word2vec" natural language processing model that is more accurate and more strict but needs more computational resources.

In an embodiment, the second algorithm and/or the third algorithm are unsupervised algorithms that are designed to apply at least one level of parametrization.

This provides the advantage that multiple levels of the parameterization can be applied to further improve the results. Typically, the algorithms start with a relaxed parameterization to prevent "overfitting" of the resulting clusters of IT-services. The output of the first level can be several clusters with similar properties and problematic clusters in which IT-services are grouped that cannot be assigned to a cluster having similar properties. The further levels with a more tuned set of parameterization are then applied to the IT-services within the problematic clusters in order to assign the problematic elements into existing clusters or to create new clusters for them.

In an embodiment, a second additional step is performed, in particular following the third step, to further cluster elements of the problematic clusters, wherein the second additional step improves the clustering within each class by using the second piece of the IT-service-information with the first algorithm and the third piece IT-service-information with a fourth algorithm on problematic clusters. In this case, the first algorithm and the fourth algorithm are based on supervised learning methods to train the algorithm.

This again provides the advantage, that the IT-services are evaluated "differently" as before. This second additional step is again applied only to the IT-services within the problematic clusters. To mitigate the "false" positive outcomes, i.e. to find similarities between IT-services do not exist, it is possible to only associate the IT-services of the second additional step into new or existing clusters if both the evaluation of the first algorithm and the evaluation of the fourth algorithm yield the same results. In other words, only the cross section of the output of the first algorithm and of the output of the fourth algorithm is associated to a new or an existing cluster.

In an embodiment, the steps of clustering are applied in the following order:
- First, apply clustering of at least one class of the IT-services based on the second piece of the IT-service-information;
- Second, apply further clustering according to the second additional step on problematic clusters;
- Third, apply further clustering according based on the third piece of the IT-service-information on problematic clusters.

Tests have shown that this order of steps is the most efficient and yields the best results concerning the clustering of IT-services, in particular webpages, into groups of similar properties.

According to a second aspect of the invention, a computer system for automatic and dynamic clustering of IT-services and/or IT-systems is provided that is configured to perform the method described above.

Basically, the computer system provides the same advantages as described in the context of the method.

According to a third aspect of the invention, a computer program product for automatic and dynamic clustering of IT-services is provided, when executed by a computer system, causes the computer system to perform the method described above.

Basically, the computer program product provides the same advantages as described in the context of the method.

In the following, preferred implementation examples of the present invention are explained with reference to the accompanying figure:
- Fig. 1:: shows an overview of a modular solution approach to mitigate cyberattacks, wherein the invention represents one module of the solution approach.
- Fig. 2a:: shows an overview of the steps of the inventive method for an automated classification and clustering of IT-systems/IT-services.
- Fig. 2b:: shows an illustrative output of process 210 of Fig. 2a.
- Fig. 3a:: shows the process "screenshot-based supervised learning" of Fig. 2a in detail.
- Fig. 3b:: shows an illustrative output of process 300 of Fig. 2a.
- Fig. 4a:: shows the process "multi- level clustering of the screenshots" of Fig. 2a in detail.
- Fig. 4b:: shows an illustrative output of process 400 of Fig. 2a.
- Fig. 5a:: shows the process 500 of Fig. 2a in detail.
- Fig. 5b:: shows an illustrative output of process 500 of Fig. 2a.
- Fig. 6a:: shows the process 600 of Fig. 2a in detail.
- Fig. 6b:: shows an illustrative output of process 600 of Fig. 2a.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

Given the large number of assets (IT systems) per enterprise and the different indicators of security issues in general, it is imperative to have (semi-) automated methods to discover relevant security issues on a large scale. One major step towards increasing the detection coverage and rate of security issues is to gain a more transparent and accurate overview of the network.

That is, to get an overview of how many and which systems do have default installations, outdated products, blocked requests, administrative components online, login interfaces etc. The more transparent and the more accurate the overview the better is the detection rate of security issues, e.g., how many and which systems do have default installations of what product and in which version?

This invention deals with the automated classification and clustering of assets that do share similar characteristics with respect to the services running on them. The goal is to answer the questions above as granular as possible, thereby, to achieve a more transparent and accurate asset overview than existing methods. For example, the method can be used to automatically classify and cluster http-services (e.g., websites), thus: Finding out suspicious and/or misconfigured websites. Grouping all IPs together, which provide similar characteristics in their website in a way, which yields better results than using search strings to group assets together and/or using hash-based comparisons of screenshots. Another example would be for instance to apply this method on the remote desktop-services, thus: Grouping all IPs together, which run Windows and have the same Windows Version.

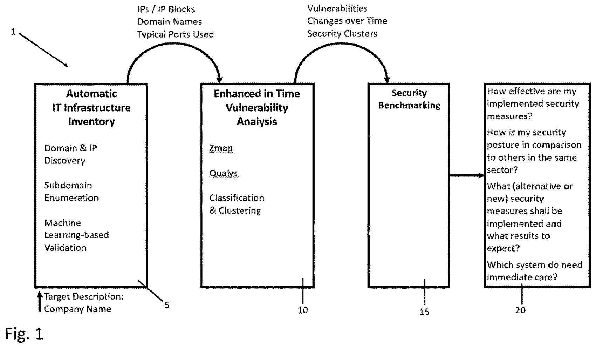

Fig. 1 shows an overview of a modular solution approach 1 to mitigate cyberattacks, wherein the invention represents one module of the solution approach.

The modular solution approach 1 is a novel combination of systems/modules for identifying and evaluating the attack surface of a company in real time. It automatically retrieves a comprehensive inventory of the IT infrastructure of a company/internet service provider. Based on an innovative framework, the modular solution approach 1 interconnects different systems in a recursive manner to efficiently collect all in-scope information. Moreover, its enhanced in time vulnerability analysis of a company's IT infrastructure makes the modular solution approach 1 an attractive solution for risk management of oneself and of contractual partners. The information gathered by the modular solution approach 1 is relevant for any company to accelerate management discussions and to take appropriate IT security decisions.

A first module 5 focuses on creating a list of all comprehensive inventory/list of the IT infrastructure of a company/internet service provider as a starting point in an automatic fashion. This process is described in the European patent application with the application number 20195992.1.

In principle, all cyber risks could be determined manually from this comprehensive list. However, especially in the case of large companies this list is likely to be so large and the individual risk of each IT-unit and/ or IT-services could change so dynamically that an efficient risk assessment is only possible if the large number of IT-unit and/or IT-services, e.g. websites and/or internet capable devices, is clustered in groups having similar properties. This invention deals in particular with an automated classification and clustering module 10 of the modular solution approach 1, which leads to a significant improve of the overall performance of the modular solution approach 1, in particular it provides better attack surface evaluation and an overview of higher transparency and accuracy.

The third module 15 serves the purpose to evaluate the vulnerabilities of each cluster, which is very efficient because that each IT-unit and/or each IT-service within the same cluster shows a similar vulnerability.

The box 20 shows possible insights that the company get from the modular solution approach 1, namely: How effective are my implemented security measures? How is my security posture in comparison to other companies in the same sector? What (alternative or new) security measures shall be implemented and what results are to expect? Which IT-unit and/or each IT-service you need immediate care?

In the following it might happen due to ease the reading of the text that only the term IT-service will be used. However, the described techniques can be applied to the IT-units, too.

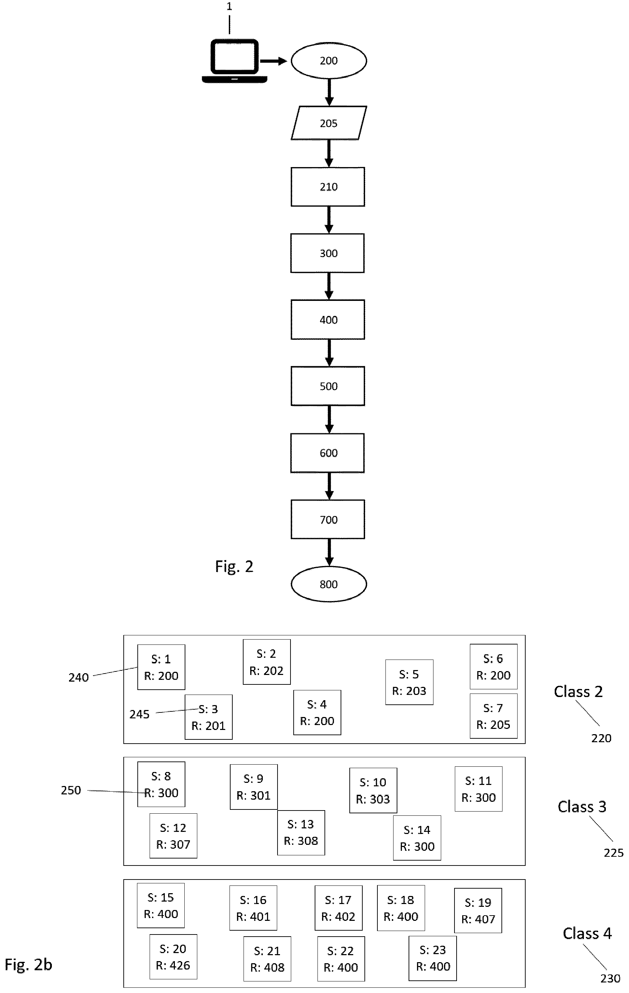

The general approach of the automated method to classify and cluster IT systems/IT-services is depicted in Fig. 2. The method can run on a computer system 1. A short description of each step as well as diagrams of the main components are provided below. The symbols of the flowcharts will be labeled as set out by the American National Standards Institute (ANSI) in the 1960s. The International Organization for Standardization (ISO) adopted the ANSI symbols in 1970. The current standard, ISO 5807, was revised in 1985.

Terminal 200 starts the process.

An input 205 inputs a list of (service-) screenshots and corresponding (service-) responses for each IT system/IT-services. For example, a list of all websites belonging to a company can be gained as described in the European patent application with the application number 20195992.1. Therefore, if one has the list of all IT-services/websites of company, it is possible to design an algorithm that is configured to automatically save screenshots (i.e. an actual picture of the web page) of these websites along with the respective "status code field". To ease the description, the classification and clustering of http-services (here websites) is used as an example.

A process 210 triggers the step of "status code and search string-based classification" and yields as an output classes of screenshots and responses. However, the combination of the "status code field" with the "screenshots of the webpages" alone does not allow an accurate determination of the classification of the respective webpages, e.g. due to custom error pages or other reasons. Instead of "status code field" the terms "response-code" or simply "response" are used. The invention regards these terms as being equal to one another.

A process 300 triggers the step of "screenshot-based supervised learning" and yields as an output "more accurate classes of screenshots and responses".

A process 400 triggers a "multi- level clustering of the screenshots" and yields as an output "clusters of screenshots and responses of each class".

A process 500 triggers a "joint screenshot-and responsive-based supervised learning" and yields as an output "more accurate clusters of screenshots and responses of each class".

A process 600 triggers a "response-based single/multi-level clustering" and yields a further clustering of cluster "0" and "-1" of each class.

A process 700 triggers "clusters of IT-services/websites having similar screenshots and responses" can be the subject of security tests or an efficient mitigation of security risks. Due to the similarity, they can be treated basically equally, which makes it especially efficient to treat common security vulnerabilities.

Terminal 800 ends the method.

In the following, the individual processes Fig. 2a will be described in greater detail.

The process 200 triggers the step of "status code and search string-based classification". An algorithm implemented on a processing unit of the computer system is designed to classify the screenshots in different classes based on the corresponding responses status-code and/or search-strings (e.g., 500, 400, 200, login etc.). In other words, search all responses of the webpages for pre-defined status-codes and search-strings and group the results (responses and corresponding screenshots - and IPs) into classes.

The search-strings can be used to find response-codes (e.g., 500, 400, 200, login etc.) of particular interest. For example, response-code "200" means that the request has succeeded, wherein a response code of 400 means a "bad request". Hence, in the process 200 the classification only based on the stages-codes and not on an analysis of the screenshots. The list of screenshots and responses can be automatically saved within the computer system. There are saved in a way that it is clear that they "belong" together. To serve that purpose, a data type can be created that connects them, for example in a first data field of the data type the screenshot is saved and in a second data field of the data type the response-code is saved. However, the combination of the "status code field" with the "screenshots of the webpages" alone does not allow an accurate determination of the classification of the respective webpages, e.g. due to custom error pages or other reasons. The response-codes do not match the actual situation all cases so that a further analysis/refinement/correction is needed. In case of a non-accurate classification, an efficient mitigation of security vulnerability is not possible because the websites do not necessarily have "similar properties" regarding the security vulnerability.

The process 200 outputs: Classes of Screenshots and Responses, e.g., 200, 400, 401, 404, 503, login.

Fig. 2b shows an illustrative example output of the process 210 of Fig. 2a. Fig. 2b shows that the screenshots are classified in three different classes, namely class "2" 220, class "3" 225, and class "4" 230. Within those classes there are smaller boxes 240 that each contain and "S" 245 and an "R" 250. The "S" 245 represented the term "screenshot" and the "R" 250 represents the term "response-code". Hence, the smaller boxes 240 indicate that each unique screenshot 245 has a response-code 250 associated to it. Different screenshots 245 can have the same response-code 250. In Fig. 2b the screenshots 245 having a response code 250 that starts with the same number are grouped into the same class.

The process 300 triggers the step of "screenshot-based supervised learning". The "screenshot-based supervised learning" algorithm aims to purify the results of process 210 by identifying wrongly classified screenshots (e.g., custom error page with status code 200 classified as non-error page 400). The algorithm is based on the idea that the information needed to purify the results can be extracted from the screenshots because graphics, texts etc. displayed on the webpage contains information, too. An effective way to enable the process 300 to gain the right information from those screenshots 245 is to implement a machine learning algorithm 301 and to apply supervised learning to train the machine learning algorithm 301 with screenshots 245 of a "correct" classification. For example, the machine learning algorithm 301 can find "login pages", which do not have the login search string in the response, thus, being not classified as login.

An example of supervised learning to use in this process 300 is the "Mobilenet algorithm" using transfer learning. This step can be mainly split into 3 sub-steps:
- Image Preprocessing, which can compromise compressing images into the same size and/or filtering methods, so that they can images can be efficiently compared to each other. Compressing can also reduce the machine learning resources;
- Converting the images into a matrix having values between 0 and 255, normalize the matrix, and train & validate the model if the model does not exist;
- Evaluate the model/Reclassify the list of screenshots.

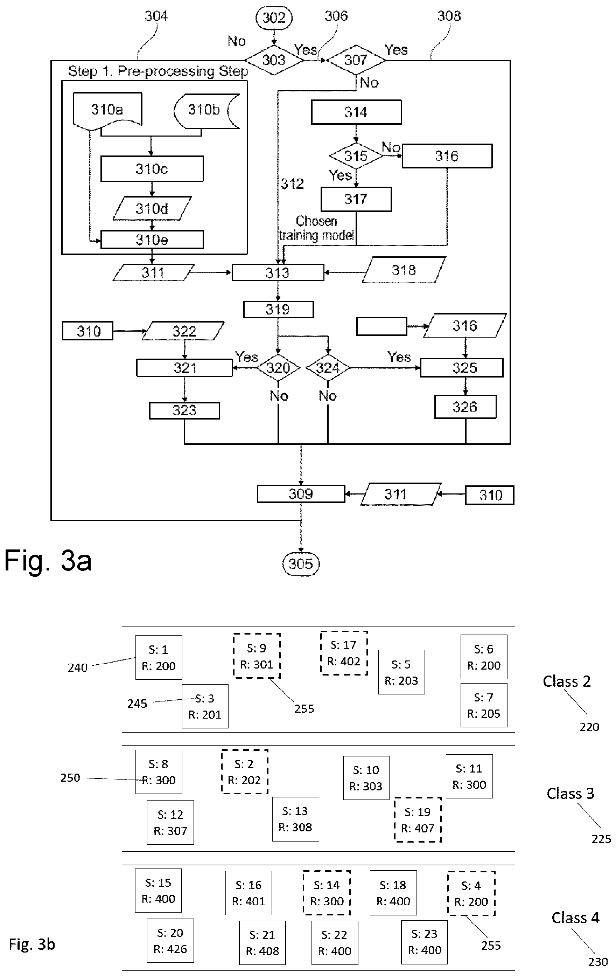

Fig. 3a shows the process screenshot-based supervised learning if Fig. 2a in detail.

Terminal 302 start the process 300. This leads to a decision 303 that checks if there is a new data set. **If** there is no new data set, a flowline 304 goes to a terminal 305 that end the process 300 without further calculations. **If** there is a new data set, a flowline 306 leads to a decision 307 that checks if the model, i.e. the machine learning algorithm 301, is already existing.

**If** the decision 307 yields that the model is already existing, then a flowline 308 leads to a process 309 in which the machine learning algorithm 301 generates more accurate classes of screenshots and responses. The new data set, that serves as an input for the process 309 is being preprocessed in a preprocessing step 310 before it is given to process 309, wherein the preprocessed data is named and labeled in step 311 accordingly so that it can be assigned to the individual screenshots 245 and to the respective response-codes 250. The preprocessing step 310 comprises the following steps. A document 310a is used in combination with a screenshot package 310b to serve as an input for a predefined process 310c. A document 310a comprises a CSV with screenshots, screenshot names, labels from status code and HTML Bodies. Hence, the document 310a provides the information to analyze the webpages. The predefined process 310c is an image preprocessing and classification "train_validate_img_pro()" process, which yields compressed images 310d. Those compressed images 310d are then converted to a matrix in a predefined process 310e.

If the decision 307 yields that the model does not yet exist, a flowline 312 leads to a predefined process 313 that is the training process of the model, i.e. of the machine learning algorithm 301. The training process of the model 313 requires as input: i) a selection of the appropriate model 314. A decision 315 asks if transfer learning shall be used. If no, then a normal convolutional neural network 316 serves as input for the model for the process 313. If yes, then use "Mobilenet for transfer learning" 317 as the model for the process 313; ii) the preprocessing step 310 followed by the labeling step 311; iii) training parameters 318 like Epoch, Batch-Size etc.

This "creates" the trained model 319. In the following, the model 319 can be validated and/or evaluated.

A decision 320 asks if the model 319 shall be validated. If no, then the evaluation process 309 is performed on the new data set 303 that generates more accurate classes of screenshots and responses. If yes, then the model 319 undergoes a validation process 321. The validation process 321 has the following inputs: i) the model 319; ii) a validation dataset 322 that has undergone the preprocessing step 310. The validation process 321 generates validation results and reports 323. Optional: The user can check if he is satisfied with the validation results and reports 323. After generating the validation results and reports 323, then the evaluation process 309 is performed on the new data set 303 that generates more accurate classes of screenshots and responses.

A decision 324 asks if the model 319 shall be evaluated. If no, then the evaluation process 309 is performed on the new data set 303 that generates more accurate classes of screenshots and responses. If yes, then the model 319 undergoes an evaluation process 325. The evaluation process 325 has the following inputs: i) the model 319; ii) an evaluation 326 dataset that has undergone the preprocessing step 310. The evaluation process 325 generates evaluation results and reports 326. Optional: The user can check if he is satisfied with the evaluation results and reports 326. After generating the evaluation results and reports 326, then the evaluation process 309 is performed on the new data set 303 that generates more accurate classes of screenshots and responses.

The output of process 300 yields more accurate classes of screenshots and responses, e.g., 200, 400, 401, 404, 503, login.

This is illustrated in Fig. 3b. The screenshots 245 that a new framed with a dashed-line style were put in a different class by the process 300. For example, the screenshots S: 19 and S: 17 were removed from class "4" 230 and the screenshots S: 4 and S: 14 were added to class "4" 230. Hence, S: 4 and S: 14 are more similar with respect to security vulnerabilities to the other screenshots of class 4 than S: 19 and S: 17.

The next processes than serve to "refine" within the classes. Test have shown that the method becomes even more efficient if one takes the differences regarding the security vulnerability within the classes into account. Hence, the aim of the next step is to find clusters of screenshots 245 within each of the classes that are more similar to each other with respect to the security vulnerability than the other screenshots of the respective class.

The output of process 300 is important for the process 400 that triggers a "multi- level clustering of the screenshots".

The process 400 can comprise three levels of processing steps.

Level 1: The standard and supervised clustering machine learning algorithm DBSCAN is used with a relaxed parameterization (e.g. Eps = 2; samples 50) and auto-encoder compression algorithm used to find clusters within each of the classes. The auto-encoder compression algorithm can detect non-linear characteristics, to cluster the screenshots in large clusters. Hence, Level 1 outputs several clusters that can be named as: - 1, 0, 1, 2, 3, .... For example, they could be 50 screenshots within cluster "-1", 40 screenshots within cluster "0", 65 screenshots within cluster "1", 35 screenshots within cluster "2", 15 screenshots within cluster "2", and so on. The clusters with the numbers "-1" and "0" have a special meaning. Basically they represent "problematic" clusters with screenshots, which cannot be classified correctly. In particular, the cluster "-1" comprises the screenshots that could be clustered into any other class and the cluster "0" is the largest and the worst is that of screenshots. The more screenshots the clusters "-1" and "0" the less efficient the method of assessing security problems is. Therefore, the next level aims to tackle this problem.

Level 2: Use the same algorithm as in Level 1 but with a tuned parameterization (e.g. Eps = 0.5; samples 5) and a PCA compression algorithm, which is focused on linear characteristics, to further cluster the previous clusters number "0" and "-1" of level 1. Of course the values of the parameterization can be adapted to each use case. Typically, after the process of level 2, they will still remain screenshots within the clusters "-1" and "0". Using the method of Level 2 after Level 1 is done to avoid overfitting, that could result from only using the tuned parameterization of Level 2 without using Level 1.

Level 3: Use the same algorithm as before in Level 2, but with a more fine-tuned parameterization (e.g. Eps = 0.25; samples 5) and PCA compression algorithm to even further cluster the remain clusters number "0" and "-1" of the previous level. Tests have shown that is more efficient to first apply level 2 to the clusters "0" and "-1" and then to apply level 3, instead of only applying the procedure of level 3.

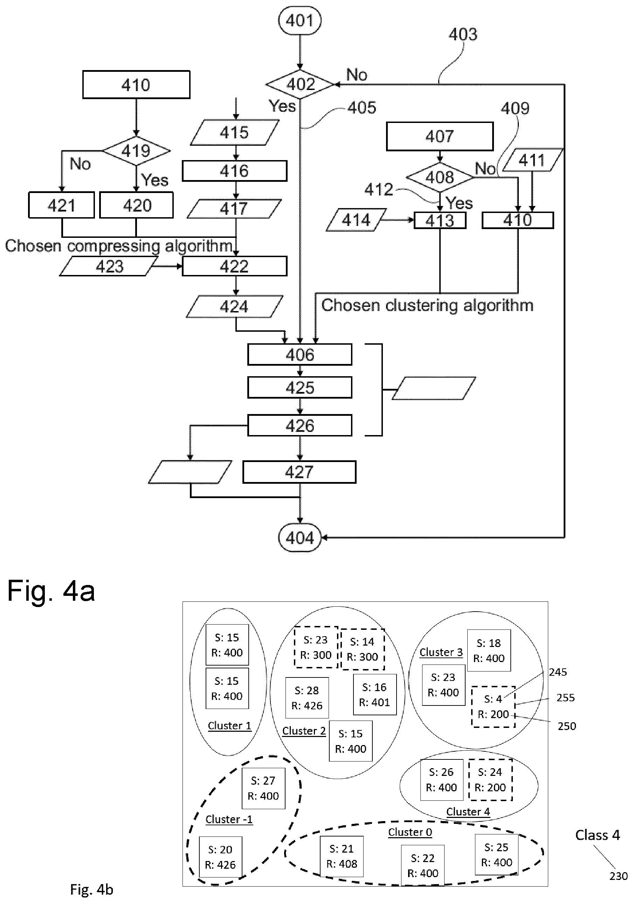

Fig. 4a shows the process "multi- level clustering of the screenshots" 400 in detail.

Terminal 401 starts the process 400. A flowline leads to a decision 400 to that asks if clusters shall be created.

If no, then a flowline 403 leads to a terminal 404 that ends the process 400.

If yes, then a flowline 405 leads to a predefined process 406 of level 1 clustering that basically performs the steps described above. The predefined level 1 clustering process 406 has to further inputs: i) process 407 determines a clustering algorithm selection. Decision 408 asks if the algorithm shall be density based. If no, a flowline 409 leads to a process 410 in which a "KMEANS or Tree" algorithm is selected. The "KMEANS or Tree" algorithm need as an input parameter 411 the number of clusters. If yes, a flowline 412 leads to a process 413 in which the DBSCAN algorithm is chosen. The DBSCAN algorithm needs as input parameters 414 Eps and a sample number. ii) of course, the predefined level 1 clustering process 406 needs as an additional input the screenshots of each class. The screenshots are processed to compressed images and serve as an import 415 for an image to matrix predefined process 416. The created matrices of the screenshots are then labeled accordingly in step 417. In addition, a compressing algorithm selection 418 is performed to compress the matrices. A decision 419 asks if a nonlinear relation is needed. If yes, then an auto-encoder model is used to compress the matrices. If no, then the PCA algorithm 421 is used to compress the matrices. The process of data compression/matrix compression 422 has as an additional input the chosen class 423. This results in a compressed data from the chosen class 424 as input for the level 1 clustering process 406.

After the level 1 clustering process 406 is finished, a flowline leads to a level 2 clustering process 425 as described above. After the level 2 clustering process 425 is finished, a flowline leads to a level 3 clustering process 426 as described above. The level 3 clustering process 426 then creates the output 427 of clusters of Screenshots and responses for each class, e.g., -1, 0, 1, 2, 3, 4 etc. with 0 and -1 being problematic cluster before the terminal 404 ends the process 400.

This output is illustrated in Fig. 4b. Fig. 4b shows only the creation of clusters of class 4. It can be seen that six different clusters are created, wherein the screenshots 245 of the clusters "1" to "4" lie closer together than the screenshots 245 of the clusters "-1" to "0". In technical terms this has the meaning that the screenshots 245 within each of the clusters "1" to "4" are similar to each other concerning security issues. Since Fig. 4b serves only illustrative purposes, it can actually happen that the numbers of screenshots 245 within the clusters "-1" to "0" is quite large, which still prevents an efficient assessing of security problems of the websites.

Therefore, a process "joint screenshot- and response-based supervised learning" 500 is started to yield as an output even more accurate clusters of screenshots and responses of each class.

The process 500 is based on different data sets than the foregoing processes and combines two different approaches to generate get the results.

The first approach, or the first part, trains the same algorithm as in process 300, e.g. the transfer deep learning algorithm "Mobilenet". In this case however, the training data set differs - due to the different training data set, different results compared to process 300 are possible. The first approach now uses as training data the clustered classes and takes the screenshot as inputs and the associated cluster numbers as the respective tags. So it uses the output of process 400, but without the problematic clusters "-1" and "0". In the next step, this trained algorithm is applied to find further screenshots belonging to a given cluster from the clusters "0" and "-1". It is possible to set a first threshold value that determines the likelihood that screenshot of the clusters "0" and "-1" belongs to any of the other clusters. Only if the probability of screenshot exceeds this first threshold value, this screenshot is considered for reclassification. All of those screenshots exceeding this first threshold form a first set of screenshots.

The second approach, or the second part, trains a TD-IDF-based algorithm (a statistical model based on natural language processing) for each cluster of screenshots based on their corresponding "http-responses". It is an important insight, that it is beneficial not only to use the screenshot information when creating the clusters because those screenshots need to be compressed so that the content of the webpage is no longer recognizable. Due to the compression, the algorithms that are trained with respect to the screenshot basically learn about the structure. However, the training of the second approach learns about the content of that page that can be assessed by the information of the HTML-Body. After having trained the TD-IDF-based algorithm, an algorithm is used to find further screenshots in the remaining clusters number "0" and "-1", which shall belong to other clusters. It is possible to set a second threshold value that determines the likelihood that screenshot of the clusters "0" and "-1" belongs to any of the other clusters. Only if the probability of screenshot exceeds this second threshold value, this screenshot is considered for reclassification. All of those screenshots exceeding this second threshold form a second set of screenshots.

The next step of process 500 then creates a cross section of the first set of screenshots and the second set of screenshots. All the screenshots that belong to this cross section are re-grouped into the appropriate clusters. Hence, process 500 outputs more accurate clusters of screenshots and responses for each class, e.g., -1, 0, 1, 2, 3, 4 etc. with "0" and "-1" being problematic cluster.

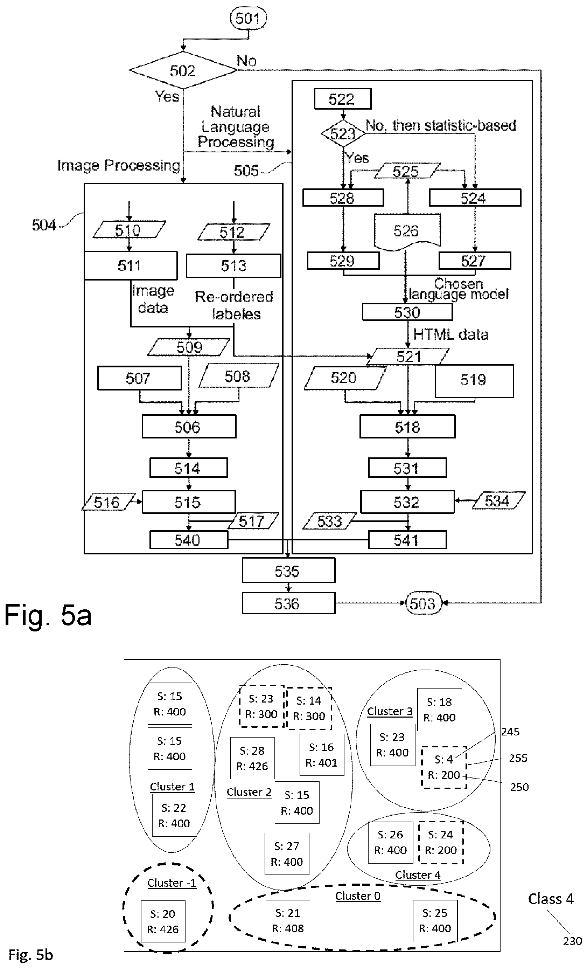

Fig. 5a shows the process 500 in detail.

Terminal 501 start the process 500. Decision 502 asks if a user wants to regroup the screenshots in the problematic clusters "-1" and "0". If no, then a flowline goes to the terminal 503 that ends the process 500. If yes, then the flowline leads to two different approaches, namely an image processing approach 504 and a natural language processing approach 505.

In the image processing approach a training process 506 starts with the screenshot as and the associated cluster numbers as inputs. Hence, the image process approach has three inputs: i) the model 507 "Mobilenet" for transfer learning; ii) parameters 508 of the model, in particular Epoch, Batch-Size, etc, and iii) the screenshot as image data 509 and the associated cluster numbers. In two pre-processes the image data 509 is being prepared. The first pre-process 510 uses compressed images of the screenshots as input for an "image to matrix" process 511. The second preprocess 512 uses as input the screenshot names and the associated labels for a "reorder class number" process 513.

The training process 506 outputs a trained model 514. This trained model 514 is applied in an evaluation process 515 to an input 516, wherein the input 516 is the screenshots of the problematic clusters "-1" and "0". If the evaluation process 515 yields that a certain screenshot exceeds a first threshold value 517, then the screenshot is re-grouped into the cluster that was determined in the evaluation process 515. The first threshold value 517 determines the likelihood that the screenshot belongs in to the determined "new" class. All screenshots that exceed this first threshold value 517 form a first set 540 of screenshots.

In the natural language processing approach 505 a training process 518 starts that uses extracted information HTML-Body of the websites that belong to the screenshots to train a model. The training process 518 has three inputs: i) a model 519 that shall be trained, wherein the model can be a Bidirectional LSTM if the Word2Vec model was used or Feed-Forward Neural Network if TF-IDF model was used; ii) parameters 520 of the model, in particular Epoch, Batch-Size, etc, and iii) the extracted HTML-Body information 521 is by eliminating 'tags like <html><\html>, <body>...' and stop words like 'is', 'the', 'a' which are meaningless. Then we got the most important information as extracted information. The HTML-Body information 521 can need an appropriate reordering and labeling that matches the reordering and labeling of the screenshots in step 509.

The HTML-Body information 521 is preprocessed in several steps. In step 522 a language model is selected. Decision 523 asks if the model shall use machine learning. If no, a flowline goes to the process 524 that trains a "TF-IDF-Model". As a further input process 524 gets a "dictionary from HTML 525" that is based on the data set 526 of CSV with screenshot names, status codes and HTML bodies of the websites. The process 524 outputs a trained TF-IDF model 527. If yes, flowline goes to the process 528 to train a "word2vec" model. As a further input process 528 gets a "dictionary from HTML 525" that is based on the data set 526 of CSV with screenshot names, status codes and HTML bodies of the websites. The process 528 outputs a trained "word2vec" 529 model.

Depending on the answer of the decision 523, the trained "word2vec" model 529 or the trained TF-IDF model 527 enter a "word to vector: HTML analysis process 530 that creates as output the HTML-Body information 521 used for the training process 518.

The training process 518 creates a model 531 that is based on "HTML"-responses of the webpages. This trained model 531 is applied in an evaluation process 532 to an input 534, wherein the input 534 the HTML data extracted of the webpages whose screenshots are inside the problematic clusters "-1" and "0". If the evaluation process 532 yields that a certain screenshot exceeds a second threshold value 533, then the website or respectively the screenshot is re-grouped into the cluster that was determined in the evaluation process 532. Since every website is uniquely assigned to a screenshot, the re-grouping can be done with the screenshots as well. The second threshold value 533 determines the likelihood that the screenshot belongs in to the determined "new" class. All screenshots that exceed this second threshold value 533 form a second set of 541 screenshots.

The next step of process 500 then creates a cross section 535 or Joint section 535 of the first set of screenshots 540 and the second set of screenshots 541. All the screenshots that belong to this cross section are re-grouped into the appropriate clusters in an update process 536. Hence, process 500 outputs more accurate clusters of screenshots and responses for each class, e.g., - 1, 0, 1, 2, 3, 4 etc. with "0" and "-1" being problematic cluster.

Fig. 5b shows an illustrative output of process 500 of Fig. 2a. The screenshot S: 22; R: 400 was re-grouped in Cluster 1 and the screenshot S: 27; R: 400 400 was re-grouped in Cluster 2. However, even after process 500 is finished they can still remain elements within cluster "-1" and "0".

The process 600 triggers a "response-based single/multi-level clustering" and yields a further clustering of cluster "0" and "-1" of each class to make the method even more efficient.

In process 500 a supervised response-based learning was applied. In contrast, process 600 now applies and unsupervised response-based learning by performing the following steps: Apply a response-based unsupervised learning using a deep learning "word2vec" natural language processing model (e.g., from genism or scikit-learn). Run this algorithm on the remaining clusters "0" and "-1" to further cluster these two clusters based on the corresponding http-responses. Depending on the number of remaining screenshots in the problematic clusters "0" and "-1", the clustering can be single or multi-level. If the multi-level approach shall be performed, then the prime leaders of the model can be further retuned/refined from level to level.

Unsupervised learning is especially suited to find similarities of the elements to which it is applied. In contrast to the supervised learning, it is not possible to regroup the clusters that have determined by the unsupervised algorithm into the already existing clusters because there is no "correct" reference data. Hence, the new clusters of process 600 are adults to the already existing list of clusters. Process 600 yields as an output a further clustering of cluster "0" and "-1" for each class.

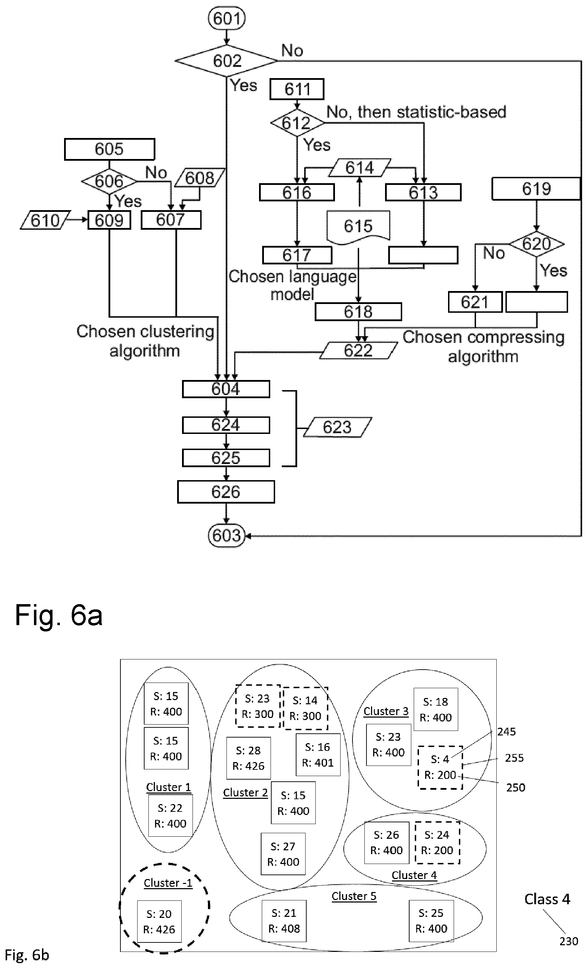

Fig. 6a shows the process 600 in detail.

Terminal 601 start the process 600. Decision 602 asks if further clustering the problematic clusters "0" and "-1" shall be performed using response information. If no, a flowline goes to terminal 603 that terminates process 600. If yes, a level 1 clustering process 604 starts that users response information from the HTML body. Lower clustering process 604 has different inputs: i) a clustering algorithm and ii) the elements of the problematic clusters "0" and "-1".

Input i) starts with a process 605 of cluster algorithm selection. Decision 606 asks if the algorithm shall be density based. If no, then process 607 selects a "KMEANS" or "TREE" algorithm with respective parameters 608. If yes, then process 609 selects "DBSCAN" with respective parameters 610.

Input ii) starts with step 611 in which a language model is selected. Decision 612 asks if the model shall use machine learning. If no, a flowline goes to the process 613 that trains a "TF-IDF-Model". As a further input process 613 gets a "dictionary from HTML 614" that is based on a data set 615 of the elements of the problematic clusters "-1" and "0" that can comprise screenshot names, status codes and HTML bodies of the websites. The process 613 outputs a TF-IDF model 527. If yes, flowline goes to the process 616 to train a "word2vec" model. As a further input process 616 gets a "dictionary from HTML 614" that is based on the data set 615 of the elements of the problematic clusters "-1" and "0" that can comprise screenshot names, status codes and HTML bodies of the websites. The process 616 outputs a "word2vec" 617 model. Depending on the answer of the decision 612, the "word2vec" model 616 or the trained TF-IDF model 613 enter a "word2vec: HTML analysis process 618. However, the data of the output of process 618 can be further compressed. Therefore, process 619 selects of compression algorithm. Decision 620 asks if a nonlinear relation needed. If no, then a flowline goes to a PCA algorithm to compress the data of the process 618 and to yield the compressed data 622 as input for the level 1 clustering process 604. If yes, then a flowline goes to an Auto-Encoder model to compress the data of the process 618 and to yield the compressed data 622 as input for the level 1 clustering process 604.

The level 1 clustering process 604 then runs with respective parameters 623. If the user wishes, further clustering processes level 2 624, ..., and level n 625 can be performed with tuned parameters.

Process 626 then creates at least one cluster for the new determined clusters and outputs the result before terminal 603 end the process 600.

Fig. 6b shows an illustrative output of process 600 of Fig. 2a. The further clustering cluster "0" and "-1" for each class can lead to the effect that all or some the elements of former cluster "-1" are now classified in cluster 5.

In summary, the multiple processes that each rely on different approaches relating the data set and/or the use algorithms yields as an output to a high level clustering of webpages with similar properties. Hence, each cluster within a class of webpages can be treated similar with respect to security aspects. This enables a very fast assessment and mitigation of security issues because one can apply the same procedures each webpages within the cluster.

## Claims

1. A method for automatic and dynamic clustering of IT-services and/or IT-systems, comprising the following steps performed by a computer system:
- as a first step (205), inputting a list of IT-services to the computer system, wherein the list of the IT-services comprises multiple IT-service-information that characterizes each of the IT-services;
- as a second step (210), classifying the IT-services into different classes based on a first piece of the IT-service-information;
- as a third step (400, 600), clustering the IT-services within at least one of the different classes based on a second piece of the IT-service-information or a third piece of the IT-service-information;
- as a fourth step (700), outputting at least one class with at least one cluster of IT-services,
**characterised in that**
- an association to a certain class and/or to a certain cluster indicates a similarity of the IT-services within that certain class and/or to that certain cluster,
- the similarity is a security vulnerability similarity
- the first IT-service-information is a status-code of the IT-service, wherein the second IT-service-information is a screenshot of the IT-service, wherein the third IT-service-information is extracted from a HTML-Body of the IT-service,
- all IT-services within the certain class and/or the certain cluster have similar properties and are handled in a uniform way by companies, wherein automated scripts perform certain tasks on the IT-service based on its class and/or cluster membership.

2. The method of any of the claims, wherein the **IT-service-information** are externally visible when requesting the IT-service.

3. The method of any of the claims, wherein a first additional step (300) is performed, in particular following the second step (210), wherein the first additional step (300) improves the classifying by assigning at least one IT-service from one class to another class based on the second piece of the **IT-service-information.**

4. The method of claim 3, wherein the first additional step (300) uses a first supervised machine learning trained on the second piece of the **IT-**service-information.

5. The method of any of the claims, wherein the third step uses a second algorithm if the clustering is based on the second piece of the IT-service-information or that the third step uses a third algorithm if the if the clustering is based on the third piece of the IT-service-information.

6. The method of claim 5, wherein the second algorithm and/or the third algorithm are unsupervised algorithms that are designed to apply at least one level of parametrization.

7. The method of claim 6, wherein further levels level of parametrization are applied to a problematic clusters, wherein the problematic cluster comprises IT-services that cannot be assigned to clusters having similar properties.

8. The method of any of the claims, wherein a second additional step (500) is performed, in particular following the third step (400, 600), to further cluster elements of the problematic clusters, wherein the second (additional) step (500) improves the clustering within each class by using the second piece of the IT-service-information with the first algorithm and the third piece IT-service-information with a fourth algorithm on problematic clusters.

9. The method of claim 8, wherein supervised learning is applied to train the first algorithm and the fourth algorithm.

10. The method of claim 9, wherein the steps of clustering (400, 500, 600) are applied in the following order:
• First, apply clustering of at least one class of the IT-services based on the second piece of the IT-service-information;
• Second, apply further clustering according to the second (additional) step (500) on problematic clusters;
• Third, apply further clustering according based on the third piece of the IT-service-information on problematic clusters.

11. Computer system for automatic and dynamic clustering of IT-services and/or IT-systems, configured to perform the method of any of the claims 1-10.

12. Computer program product for automatic and dynamic clustering of IT-services, when executed by a computer system, causes the computer system to perform the method of any of the claims 1-10.

## Patentansprüche

1. Verfahren zum automatischen und dynamischen Clustern von IT-Diensten und/oder IT-Systemen, umfassend die folgenden, von einem Computersystem durchgeführten Schritte:
- als einen ersten Schritt (205), Eingeben einer Liste von IT-Diensten an das Computersystem, wobei die Liste der IT-Dienste mehrere II-Dienst-Informationen umfasst, die jeden der IT-Dienste charakterisieren;
- als einen zweiten Schritt (210), Klassifizieren der IT-Dienste in verschiedene Klassen basierend auf einer ersten Information der IT-Dienst-Informationen;
- als einen dritten Schritt (400, 600), Clustering der IT-Dienste innerhalb mindestens einer der verschiedenen Klassen basierend auf einer zweiten Information der IT-Dienst-Informationen oder einer dritten Information der IT-Dienst-Informationen;
- als einen vierten Schritt (700), Ausgeben mindestens einer Klasse mit mindestens einem Cluster von IT-Diensten,
**dadurch gekennzeichnet, dass**
- eine Assoziierung zu einer bestimmten Klasse und/oder einem bestimmten Cluster eine Ähnlichkeit der IT-Dienste innerhalb der bestimmten Klasse und/oder des bestimmten Clusters angibt,
- die Ähnlichkeit eine Sicherheitsverwundbarkeits-Ähnlichkeit ist,
- es sich bei der ersten IT-Dienst-Information um einen Statuscode des IT-Dienstes handelt, wobei es sich bei der zweiten IT-Dienst-Information um einen Screenshot des IT-Dienstes handelt, wobei die dritte IT-Dienst-Information aus einem HTML-Body des IT-Dienstes extrahiert wird,
- alle IT-Dienste innerhalb der bestimmten Klasse und/oder des bestimmten Clusters gleichartige Eigenschaften aufweisen und von Unternehmen auf einheitliche Weise gehandhabt werden, wobei automatisierte Skripte bestimmte Aufgaben an dem IT-Dienst basierend auf dessen Klassen- und/oder Cluster-Mitgliedschaft ausführen.

2. Verfahren nach einem der Ansprüche, wobei die IT-Dienst-Informationen beim Anfordern des IT-Diensts extern sichtbar sind.

3. Verfahren nach einem der Ansprüche, wobei, insbesondere folgend auf den zweiten Schritt (210), ein erster zusätzlicher Schritt (300) durchgeführt wird, wobei der erste zusätzliche Schritt (300) durch Zuweisen mindestens eines IT-Dienstes aus einer Klasse an eine andere Klasse basierend auf der zweiten Information der IT-Dienst-Informationen das Klassifizieren verbessert.

4. Verfahren nach Anspruch 3, wobei der erste zusätzliche Schritt (300) ein erstes überwachtes Maschinenlernen verwendet, das an der zweiten Information der IT-Dienst-Informationen trainiert ist.

5. Verfahren nach einem der Ansprüche, wobei der dritte Schritt einen zweiten Algorithmus verwendet, falls das Clustering auf der zweiten Information der IT-Dienst-Informationen basiert, oder dass der dritte Schritt einen dritten Algorithmus verwendet, falls das falls das Clustering auf der dritten Information der IT-Dienst-Informationen basiert.

6. Verfahren nach Anspruch 5, wobei der zweite Algorithmus und/oder der dritte Algorithmus nicht überwachte Algorithmen sind, die dazu ausgestaltet sind, mindestens eine Parametrierungsstufe anzuwenden.

7. Verfahren nach Anspruch 6, wobei auf einen problematischen Cluster weitere Parametrierungsstufen angewendet werden, wobei der problematische Cluster IT-Dienste umfasst, die keinen Clustern mit gleichartigen Eigenschaften zugewiesen werden können.

8. Verfahren nach einem der Ansprüche, wobei, insbesondere folgend auf den dritten Schritt (400, 600), ein zweiter zusätzlicher Schritt (500) an weiteren Clusterelementen der problematischen Cluster durchgeführt wird, wobei der zweite (zusätzliche) Schritt (500) durch Verwenden der zweiten Information der IT-Dienst-Informationen mit dem ersten Algorithmus und der dritten Information der IT-Dienst-Informationen mit einem vierten Algorithmus an problematischen Clustern das Clustering innerhalb jeder Klasse verbessert.

9. Verfahren nach Anspruch 8, wobei überwachtes Lernen angewendet wird, um den ersten Algorithmus und den vierten Algorithmus zu trainieren.

10. Verfahren nach Anspruch 9, wobei die Schritte mit Clustering (400, 500, 600) in der folgenden Reihenfolge angewendet werden:
• erstens, Anwenden von Clustering mindestens einer Klasse der IT-Dienste basierend auf der zweiten Information der IT-Dienst-Informationen;
• zweitens, Anwenden weiteren Clusterings gemäß dem zweiten (zusätzlichen) Schritt (500) auf problematische Cluster;
• drittens, Anwenden weiteren Clusterings gemäß basierend auf der dritten Information der IT-Dienst-Informationen auf problematische Cluster.

11. Computersystem für automatisches und dynamisches Clustering von IT-Diensten und/oder IT-Systemen, dazu eingerichtet, das Verfahren nach einem der Ansprüche 1 bis 10 durchzuführen.

12. Computerprogrammprodukt für automatisches und dynamisches Clustering von IT-Diensten, wenn es durch ein Computersystem ausgeführt wird, das Computersystem dazu veranlasst, das Verfahren nach einem der Ansprüche 1 bis 10 durchzuführen.

## Revendications

1. Procédé de regroupement automatique et dynamique de services informatiques et/ou de systèmes informatiques, comprenant les étapes suivantes exécutées par un système informatique :
- en tant que première étape (205), saisir une liste de services informatiques dans le système informatique, dans lequel la liste des services informatiques comprend plusieurs informations de services informatiques qui caractérisent chacun des services informatiques ;
- en tant que deuxième étape (210), classer les services informatiques en différentes classes sur la base d'un premier élément des informations de services informatiques ;
- en tant que troisième étape (400, 600), regrouper les services informatiques dans au moins une des différentes classes sur la base d'un deuxième élément des informations de services informatiques ou d'un troisième élément des informations de services informatiques ;
- en tant que quatrième étape (700), délivrer en sortie au moins une classe avec au moins un groupe de services informatiques,
**caractérisé en ce que**
- une association à une certaine classe et/ou à un certain groupe indique une similarité des services informatiques au sein de cette certaine classe et/ou de ce certain groupe,
- la similarité est une similarité de vulnérabilité de sécurité
- la première information de service informatique est un code d'état du service informatique, dans lequel la deuxième information de service informatique est une capture d'écran du service informatique, dans lequel la troisième information de service informatique est extraite d'un corps HTML du service informatique,
- tous les services informatiques au sein de la certaine classe et/ou du certain groupe ont des propriétés similaires et sont traités de manière uniforme par les entreprises, dans lequel des scripts automatisés exécutent certaines tâches sur le service informatique en fonction de son appartenance à une classe et/ou à un groupe.

2. Procédé selon une quelconque des revendications, dans lequel les informations de service informatique sont visibles de l'extérieur lors de la demande du service informatique.

3. Procédé selon une quelconque des revendications, dans lequel une première étape supplémentaire (300) est effectuée, en particulier après la deuxième étape (210), dans lequel la première étape supplémentaire (300) améliore la classification en attribuant au moins un service informatique d'une classe à une autre classe sur la base du deuxième élément d'informations de service informatique.

4. Procédé selon la revendication 3, dans lequel la première étape supplémentaire (300) utilise un premier apprentissage automatique supervisé entraîné sur le deuxième élément d'informations de service informatique.

5. Procédé selon une quelconque des revendications, dans lequel la troisième étape utilise un deuxième algorithme si le regroupement est basé sur le deuxième élément d'informations de service informatique ou que la troisième étape utilise un troisième algorithme si le regroupement est basé sur le troisième élément d'information de service informatique.

6. Procédé selon la revendication 5, dans lequel le deuxième algorithme et/ou le troisième algorithme sont des algorithmes non supervisés qui sont conçus pour appliquer au moins un niveau de paramétrisation.

7. Procédé selon la revendication 6, dans lequel des niveaux supplémentaires de paramétrisation sont appliqués à des groupes problématiques, dans lequel le groupe problématique comprend des services informatiques qui ne peuvent pas être attribués à des groupes ayant des propriétés similaires.

8. Procédé selon une quelconque des revendications, dans lequel une deuxième étape supplémentaire (500) est effectuée, en particulier après la troisième étape (400, 600), pour regrouper davantage des éléments des groupes problématiques, dans lequel la deuxième étape (supplémentaire) (500) améliore le regroupement au sein de chaque classe en utilisant le deuxième élément des informations de service informatique avec le premier algorithme et le troisième élément des informations de service informatique avec un quatrième algorithme sur des groupes problématiques.

9. Procédé selon la revendication 8, dans lequel un apprentissage supervisé est appliqué pour entraîner le premier algorithme et le quatrième algorithme.

10. Procédé selon la revendication 9, dans lequel les étapes de regroupement (400, 500, 600) sont appliquées dans l'ordre suivant :
• premièrement, appliquer le regroupement d'au moins une classe des services informatiques sur la base du deuxième élément des informations de service informatique ;
• deuxièmement, appliquer un regroupement supplémentaire conformément à la deuxième étape (supplémentaire) (500) sur les groupes problématiques ;
• troisièmement, appliquer un regroupement supplémentaire conformément au troisième élément des informations de service informatique sur les groupes problématiques.

11. Système informatique pour le regroupement automatique et dynamique de services informatiques et/ou de systèmes informatiques configuré pour mettre en œuvre le procédé selon une quelconque des revendications 1 à 10.

12. Produit de programme informatique pour le regroupement automatique et dynamique de services informatiques qui, lorsqu'il est exécuté par un système informatique, amène le système informatique à mettre en œuvre le procédé selon une quelconque des revendications 1 à 10.
